# FASCICULE DE BREVET EUROPEEN

(11) **EP 0 391 765 B1**
(45) Date de publication et mention de la délivrance du brevet: **03.11.1993**
(21) Numéro de dépôt: 90400801.8
(22) Date de dépôt: 23.03.1990
(51) Int. Cl.: E03C 1/05, F16K 31/02

(54) **Robinet à ouverture commandée à distance**
Ferngesteuerter Hahn
Remotely actuated tap

(30) Priorité: 07.04.1989 FR 8904578
(43) Date de publication de la demande: 10.10.1990
(73) Titulaire: LES ROBINETS PRESTO Société anonyme dite:, 92120 Montrouge (FR)
(72) Inventeur: Dutheil, Daniel, F-17132 Mescheres (FR)
(74) Mandataire: Vander-Heym, Serge

(56) Documents cités:
- DE-A- 2 721 154
- DE-A- 3 025 603
- GB-A- 2 206 397
- US-A- 4 681 141

## Description

La présente invention est relative à un robinet à ouverture commandée à distance et elle s'applique, plus particulièrement mais non exclusivement, aux robinets mélangeurs.

On a déjà réalisé des robinets de ce genre comportant une cellule de détection, logée dans le corps du robinet, qui lorsque les mains de l'usager se trouvent dans une zone proche du bec verseur, envoie un signal à un dispositif électronique situé à l'extérieur du robinet lequel, par l'entremise d'un relais, excite deux électrovannes de commande de l'ouverture des deux clapets, le mélange eau chaude. eau froide s'effectuant à la sortie du robinet.

Outre que de tels dispositifs nécessitent deux électrovannes, ils posent de sérieux problèmes à l'installation.

On connaît aussi un robinet de ce genre dans lequel le mélange eau chaude,eau froide s'effectue en amont du clapet général qui est commandé par un électrovanne unique.

Un tel robinet est décrit dans le brevet US-A- 4 741 363.

Il s'avère toutefois que le robinet décrit dans ce brevet présente un aspect peu avantageux et nécessite, pour sa réalisation. des pièces compliquées.

Des remarques analogues peuvent être faites à propos du robinet décrit dans le document GB-A-2.206.397.

La conception d'un tel robinet pose, en fait, les problèmes ci-dessous :

En premier lieu, la réalisation des différentes pièces constituant le robinet ne doit pas nécessiter d'usinages de grande précision ce qui augmenterait le prix de revient du robinet.

L'assemblage des différentes parties doit être aussi simple que possible.

Le corps doit être conçu pour réserver un espace suffisant pour loger l'électrovanne de commande du clapet, le dispositif de détection et l'électronique.

L'invention qui remédie à ces inconvénients est relative à un robinet à ouverture commandée à distance et du genre de ceux dits mélangeurs, réalisé en deux parties assemblées, la première ou embase comportant des arrivées d'eau et une chambre de mélange de cette eau, tandis que la seconde, ou corps, qui coiffe la première, affecte une forme tubulaire, présente à sa partie supérieure un bec verseur, qui communique avec la chambre de mélange grâce à un clapet usuel, et ménage une chambre sèche dans laquelle sont logés une électro-vanne de commande du clapet, et un boîtier renfermant un dispositif de détection et son électronique, l'eau sortant de la chambre de mélange parvenant au siège dudit clapet par l'entremise d'un conduit s'étendant parallèlement, à la direction selon laquelle se déplace ledit clapet caractérisé en ce que le conduit est constitué par un tube, les extrémités du tube sont engagées librement, dans les alésages respectivement d'un bouchon, portant le clapet, et d'une pièce épaulée, comportant la chambre de mélange, l'étanchéité aux extrémités du tube étant assurée par des joints toriques.

L'invention sera mieux comprise par la description qui va suivre, faite en se référant aux dessins annexés à titre d'exemple indicatif seulement, sur lesquels :
La figure 1 est une vue en coupe verticale d'un robinet conforme à l'invention ;
La figure 2 est une vue en coupe, effectuée selon la ligne II-II de la figure 1;
La figure 3 est une vue partielle , en perspective, montrant un détail de réalisation.

En se reportant aux dessins, on voit que le robinet est constitué par l'assemblage de deux parties 1 et 2.

La partie 1, ou embase, est fixée sur un support et comporte les arrivées d'eau 3 et 4 et la chambre de mélange 5.

La fixation de la partie 2, ou corps, sur l'embase 1 s'effectue, de préférence, à l'aide de vis 6 et d'une bague 7, telles que décrites en détail dans le brevet Français FR-A-2.641.052, déposée le 23 Décembre 1988, au nom de la demanderesse.

Le corps 2, qui affecte une forme tubulaire, comporte à sa partie supérieure le clapet 8, usuel, faisant communiquer la chambre de mélange 5 et le bec verseur 2a.

Le siège 9 du clapet communique avec la chambre de mélange par l'entremise d'un tube 10.

Le tube 10 est disposé parallèlement à l'axe du corps 1 de façon à ménager dans ce dernier une chambre sèche 11 dans laquelle sont logés l'électrovanne 12 et un boitier 13 renfermant le dispositif de détection et l'électronique.

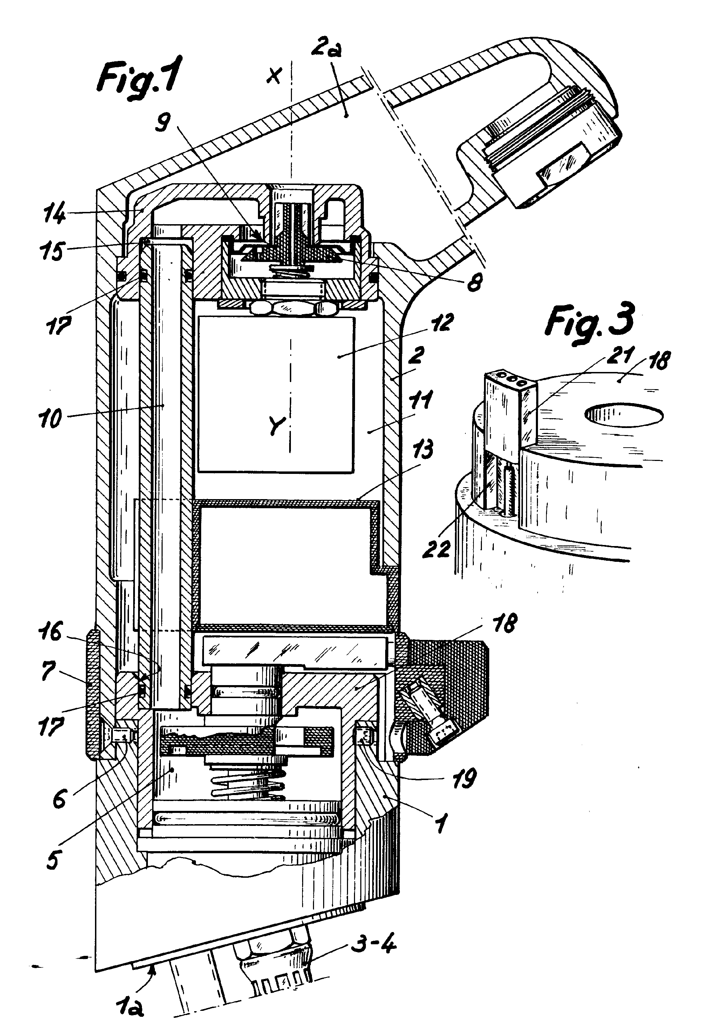

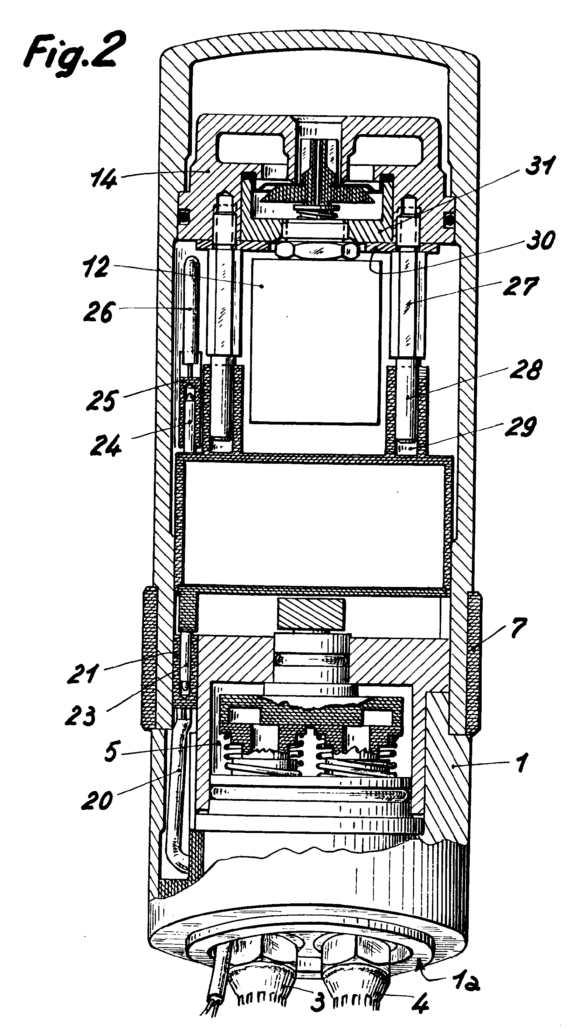

Le siège 9 est porté par un bouchon 14, épaulé, prenant appui sous un épaulement correspondant de la partie supérieure du corps 1, comme cela ressort des figures 1 et 2.

Le tube 10 est engagé par son extrémité supérieure dans un alésage 15 du bouchon 14 et par son extrémité inférieure,dans un alésage 16 de l'embase 1. L'étanchéité est assurée par des joints toriques 17. La longueur du tube 10 est inférieure à la distance séparant les fonds des alésages 15 et 16.

Selon un mode de réalisation, l'alésage 16 est prévu dans une pièce 18 épaulée, engagée sur l'embase 1 et maintenue sur celle-ci à l'aide de vis 19 (tel que décrit dans le brevet français précité).

Comme cela ressort de la description et des dessins, toutes les pièces décrites ci-dessus s'assemblent selon un déplacement parallèle à l'axe X-Y.

L'alimentation électrique s'effectue par l'entremise d'un câble 20, pénétrant dans l'embase 1 par sa face d'appui 1ₐ.

Le câble 20 est relié à un connecteur femelle 21, guidé selon la direction de l'axe X-Y dans une rainure 22 de la pièce épaulée 18 (figure 3).

Le boitier 13 comporte des broches de connexion 23 et 24 s'étendant selon la direction de l'axe X-Y.

Les broches 24 peuvent coopérer avec un connecteur 25, relié par un câble souple 26 à l'électrovanne 12,

Toujours dans l'esprit de réaliser des pièces présentant des tolérances d'usinage relativement importantes, le bouchon 14 comporte deux colonnes 27, vissées par une de leurs extrémités dans ledit bouchon et comportant, à l'autre, une extrémité cylindrique 28 s'engageant sans jeu dans un alésage 29 situé à la partie supérieure du boîtier 13.

Les colonnes 27 ont également pour fonction, par l'entremise d'une plaque 30, de maintenir la pièce 31, d'accès au clapet, et l'électrovanne fixé sur cette dernière, comme cela ressort clairement des dessins.

Bien entendu, la présente invention ne se limite pas au mode de réalisation décrit et représenté mais s'étend. au contraire, à toutes variantes de formes et dimensions, conformément à la revendication.

## Revendications

1. Robinet à ouverture commandée à distance et du genre de ceux dits mélangeurs, réalisé en deux parties ( 1 et 2) assemblées, la première (1) ou embase comportant les arrivées d'eau (3-4) et une chambre de mélange (5) de cette eau, tandis que la seconde (2), ou corps, qui coiffe la première, affecte une forme tubulaire, présente à sa partie supérieure un bec verseur (2a), qui communique avec la chambre de mélange (5) grâce à un clapet usuel (8), et ménage une chambre sèche (11) dans laquelle sont logés une électro-vanne (12) de commande du clapet (8), et un boîtier (13) renfermant un dispositif de détection et son électronique, l'eau sortant de la chambre de mélange (5) parvenant au siège dudit clapet (8) par l'entremise d'un conduit s'étendant parallèlement à la direction (X-Y) selon laquelle se déplace ledit clapet (8) caractérisé en ce que le conduit est constitué par un tube (10), les extrémités du tube (10) sont engagées librement, dans les alésages (15-16), respectivement d'un bouchon (14), portant le clapet (8), et d'une pièce épaulée (18), comportant la chambre de mélange (5), l'étanchéité aux extrémités du tube (10) étant assurée par des joints toriques (17).

## Patentansprüche

1. Wasserhahn mit ferngesteuerter Öffnung von der Art der sogenannten Mischbatterien aus zwei zusammengesetzten Teilen (1 und 2), wobei der erste Teil (1) oder Sockel die Wasserzufuhr (3, 4) und eine Mischkammer (5) für das zugeführte Wasser enthält, während der zweite Teil (2) oder Hahnkörper, der auf dem ersten Teil angebracht und rohrförmig ausgeführt ist, auf der Oberseite einen Ausguß (2a) besitzt, der über eine Ventilklappe (8) bekannter Bauart mit der Mischkammer (5) verbunden ist und einen trockenen Raum (11) aufweist, in dem ein Elektroventil (12) zur Steuerung der Ventilklappe (8) eingebaut ist, sowie ein Gehäuse (13), in dem ein Detektor und die zugehörige Elektronik untergebracht sind, wobei das aus der Mischkammer (5) strömende Wasser über eine Leitung zum Sitz des ventils (8) gelangt, die parallel zur Richtung (X-Y) verläuft, in der sich das Ventil (8) bewegt, dadurch gekennzeichnet, daß die Leitung aus einem Rohr (10) besteht, dessen Enden frei in Bohrungen (15, 16) sitzen, bzw. einem Stopfen (14), der das Ventil (8) trägt, und einem Schulterteil (18), das die Mischkammer (5) beinhaltet, xwobei die Dichtigkeit an den Enden des Rohres (10) durch O-Ringe (17) gewährleistet ist.

## Claims

1. Tap with remote-controlled opening and of the mixer type formed of two assembled portions (1 and 2), the first (1) or base comprising water intakes (3-4) and a chamber (5) for mixing this water, whereas the second portion (2) or body nesting the first portion has a tubular shape and has at its upper portion a pouring spout (2a) which communicates with the mixing chamber (5) via a normal valve (8) and provides a dry chamber (11) housing an electrovalve (12) for controlling the valve (8) and a box (13) containing a detection device and its electronics, the water leaving the mixing chamber (5) arriving at the seat of said valve (8) via the intervention of a pipe extending parallel to the direction (X-Y) along which said valve (8) moves, wherein the pipe is constituted by a tube (10), the extremities of the tube (10) being freely engaged in the bores (15-16) respectively of a plug (14) bearing the valve (8) and a shouldered piece (18) comprising the mixing chamber (5), imperviousness at the extremities of the tube (10) being ensured by O-ring seals (17).
